# EUROPEAN PATENT APPLICATION

(11) **EP 4 011 566 A1**
(43) Date of publication of application: **15.06.2022**
(21) Application number: 19941507.6
(22) Date of filing: 27.08.2019
(51) Int. Cl.: B25J 9/16

(54) **AUTONOMOUS MOBILE DEVICE**

(30) Priority: 09.08.2019 CN 201910735857
(71) Applicant: Ecovacs Robotics Co., Ltd., Wuzhong District Suzhou, Jiangsu 215168 (CN)
(72) Inventor: TIAN, Meiqin, Suzhou, Jiangsu 215168 (CN); XIE, Kaixuan, Suzhou, Jiangsu 215168 (CN)
(74) Representative: Viering, Jentschura & Partner mbB Patent- und Rechtsanwälte
(86) International application number: PCT/CN2019/102789
(87) International publication number: WO 2021/026965

(57) **Abstract**

Provided is an autonomous mobile device (100). An area array laser sensor (106) is obliquely mounted on a device body (101) of the autonomous mobile device (100) in a direction of a vertical field angle. In such a manner, an observation range for an information-poor region may be reduced, and an observation range for an information-rich region may be enlarged, so that acquisition of richer external environmental information within the vertical field angle is facilitated, the perception accuracy of the autonomous mobile device for the external environment is improved.

## Description

### CROSS-REFERENCE TO RELATED APPLICATIONS

The present disclosure claims priority to Chinese Patent Application No. 2019107358570, filed on August 09, 2019, and entitled "Autonomous Mobile Device", which is incorporated herein by reference.

### FIELD

The present disclosure relates to the field of artificial intelligence technology, and more particularly to an autonomous mobile device.

### BACKGROUND

Along with development of artificial intelligence technologies, research on autonomous mobile devices such as robots has gradually been deepened. An autonomous mobile device may autonomously move and execute a task on the basis that the autonomous mobile device may perceive an external environment and interact with the external environment.

An existing autonomous mobile device mostly acquires external environmental information through a sensor and perceives an external environment according to the external environmental information. However, the perception accuracy of an existing autonomous mobile device for an external environment is relatively low and needs to be further improved.

### SUMMARY

Various aspects of the present disclosure provide an autonomous mobile device to improve the perception of the autonomous mobile device for an external environment and improve the perception accuracy for the external environment.

Some embodiments of the present disclosure provide an autonomous mobile device, which may include a device body and a first area array laser sensor. The first area array laser sensor may be obliquely mounted on the device body in a direction of a vertical field angle.

Some embodiments of the present disclosure also provide an autonomous mobile device, which may include a device body and a first area array laser sensor and a second area array laser sensor mounted on the device body. The first area array laser sensor may be mounted on a front side of the device body, and the second area array laser sensor may be mounted on a lateral surface of the device body.

In some embodiments of the present disclosure, an oblique mounting manner is proposed for the area array laser sensor, namely the area array laser sensor is obliquely mounted on the device body of the autonomous mobile device in the direction of the vertical field angle. In such a manner, an observation range for an information-poor region may be reduced and an observation range for an information-rich region may be enlarged so that acquisition of richer external environmental information within the vertical field angle is facilitated, the quality of the acquired external environmental information is improved, the perception of the autonomous mobile device for an external environment is further improved, and the perception accuracy of the autonomous mobile device for the external environment is improved.

### BRIEF DESCRIPTION OF THE DRAWINGS

Drawings described herein are used to provide further understanding of the present disclosure and constitute a part of the application. The schematic embodiments of the present disclosure and illustrations thereof serve to explain the present disclosure and should not be considered as limiting the present disclosure. In the drawings:
FIG. 1 is a schematic diagram of a hardware structure of an autonomous mobile device according to an exemplary embodiment of the present disclosure;
FIG. 2a is a schematic diagram of a relationship between an angular bisector of a vertical field angle of an area array laser sensor and a horizontal line under an oblique mounting manner and a horizontal mounting manner according to an exemplary embodiment of the present disclosure;
FIG. 2b is a schematic diagram of a relationship between an angular bisector of a vertical field angle of an area array laser sensor and a horizontal line under an oblique mounting manner and a horizontal mounting manner according to an exemplary embodiment of the present disclosure;
FIG. 3 is a schematic diagram of a hardware structure of another autonomous mobile device according to an exemplary embodiment of the present disclosure;
FIG. 4a is a schematic diagram of a hardware structure of another autonomous mobile device according to an exemplary embodiment of the present disclosure;
FIG. 4b is a schematic diagram of mounting positions of two area array laser sensors on an autonomous mobile device according to an exemplary embodiment of the present disclosure;
FIG. 4c is a schematic diagram of an intersection of maximum viewing distance ends of vertical field angles of two area array laser sensors according to an exemplary embodiment of the present disclosure;
FIG. 4d is a schematic diagram of parallel boundaries of vertical field angles of two area array laser sensors according to an exemplary embodiment of the present disclosure; and
FIG. 4e is a schematic diagram of an intersection of specified positions of boundaries of vertical field angles of two area array laser sensors according to an exemplary embodiment of the present disclosure.

### DETAILED DESCRIPTION OF EXAMPLE EMBODIMENTS

To clarify the objectives, technical solutions and advantages of the present disclosure, reference will be made to the technical solutions of the present disclosure in combination with specific embodiments and corresponding drawings of the present disclosure. The described embodiments are merely exemplary embodiments of the present disclosure and not all the embodiments. The present disclosure envisions all other embodiments that could be obtained by those of ordinary skill in the art.

For the technical problems of an existing autonomous mobile device such as relatively poor perception for an external environment, relatively low perception accuracy for the external environment and the like, in some embodiments of the present disclosure, an oblique mounting manner is proposed for an area array laser sensor, namely the area array laser sensor is obliquely mounted on a device body of an autonomous mobile device in a direction of a vertical field angle. In such a manner, an observation range for an information-poor region may be reduced, and an observation range for an information-rich region may be enlarged, so that acquisition of richer external environmental information within the vertical field angle is facilitated, the quality of the acquired external environmental information is improved, the perception of the autonomous mobile device for an external environment is further improved, and the perception accuracy of the autonomous mobile device for the external environment is improved.

The technical solutions provided in various embodiments of the present disclosure are described below in detail with reference to the drawings.

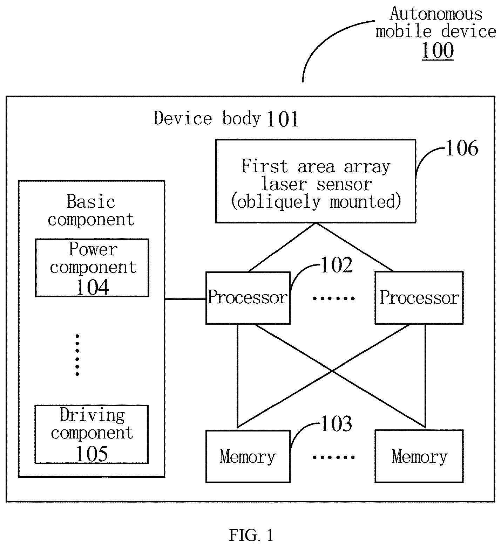

FIG. 1 is a schematic diagram of a hardware structure of an autonomous mobile device according to an exemplary embodiment of the present disclosure. As shown in FIG. 1, the autonomous mobile device 100 may include a device body 101. In some embodiments, one or more processors 102 and one or more memories 103 may be arranged on the device body 101.

The one or more memories 103 may be used to store a computer program, and the computer program may be executed by the one or more processors 102 to enable the one or more processors 102 to control the autonomous mobile device 100 to execute a corresponding task. Besides storing the computer program, the one or more memories 103 may further be configured to store various other data to support operations on the autonomous mobile device 100. Examples of such data may include instructions for any application programs or methods operated on the autonomous mobile device 100, map data of an environment/scenario where the autonomous mobile device 100 is located, a working mode, a working parameter, etc.

The one or more memories 103 may be implemented by any type of volatile or non-volatile memory devices or a combination thereof, such as, for example, a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The one or more processors 102 may be considered as a control system of the autonomous mobile device 100 and may be used to execute the computer program stored in the one or more memories 103 to control the autonomous mobile device 100 to execute the corresponding task.

Further, besides the one or more processors 102 and the one or more memories 103, in some embodiments, the autonomous mobile device 100 may include other basic components that may be further arranged or mounted on the device body 101 such as, for example, a power component 104, a driving component 105, etc. In some embodiments, the driving component 105 may optionally include a driving wheel, a driving motor, a universal wheel, etc.

It is to be noted here that the basic components of different autonomous mobile devices 100 and the compositions of the basic components may be different depending on the particular implementation of a particular autonomous mobile device 100 and only examples are presented in the embodiments of the present disclosure. In addition, the environments where different autonomous mobile devices 100 are located, the tasks required to be executed, the functions that may be realized and the like may also be different and are provided as examples.

In some embodiments, the autonomous mobile device 100 is not limited, and the autonomous mobile device 100 may be any mechanical device capable of implementing highly autonomous spatial movement in the environment where it is located, for example, a driverless car, an unmanned aerial vehicle, a robot or an air purifier. The autonomous mobile device 100 may be various types of robots such as a cleaning robot and other service robots. A cleaning robot refers to a robot capable of autonomously executing a cleaning task in an operating environment thereof and includes a sweeping robot, a window cleaning robot and the like. Other service robots refer to a robot capable of autonomously moving and providing non-cleaning service in an operating environment thereof and include a family caregiver robot, a greeting robot or a warehouse carrying robot, etc.

In some embodiments, the autonomous mobile device 100 may also be in different shapes associated with different implementation forms of the autonomous mobile device 100. The implementation form of the autonomous mobile device 100 is not limited in the present embodiment. For example, in some embodiments, an outer contour shape of the autonomous mobile device 100 may be an irregular shape and may also be some regular shapes. For example, when the autonomous mobile device 100 is a sweeping robot, an outer contour of the sweeping robot may be a regular shape such as a round shape, an ellipse, a square or a triangle. Correspondingly, any other shape except the regular shape is called an irregular shape. For example, an outer contour of a humanoid robot, an outer contour of a driverless car, an outer contour of an unmanned aerial vehicle and the like are irregular shapes.

The autonomous mobile device 100 in any form may be required to perceive an external environment where it is located to autonomously move in the environment. Therefore, the autonomous mobile device 100 of some embodiments may further include a first area array laser sensor 106. The first area array laser sensor 106 may be mounted on the device body 101 and may acquire environmental information in the external environment where the autonomous mobile device 100 is located and may transmit the acquired external environmental information to the one or more processors 102. The one or more processors 102 may perceive the external environment according to the external environmental information acquired by the first area array laser sensor 106 and further control the autonomous mobile device 100 to enable the autonomous mobile device 100 to execute the corresponding task or realize a corresponding function.

"First" in the first area array laser sensor 106 is a label to distinguish between the first area array laser sensor 106 and any other area array laser sensors. "First" does not represent any particular number, sequence, or ordering for the first area array laser sensor 106. A structure, working principle, advantages and the like of the area array laser sensor will be briefly introduced below.

The area array laser sensor may include a laser emission array and an information acquisition module. The information acquisition module may acquire an environmental image and may also receive reflected light formed by reflecting a laser off an object. The information acquisition module may include a component such as a camera.

One working principle of the area array laser sensor may include: the laser emission array emits a light source to the outside through an optical imaging system in front of it, and the emitted light source, after arriving at a surface of the object, is partially reflected to form a pixel on an image through an optical imaging system in front of the information acquisition module. Because of different distances between the surface of the object and return points, a Time Of Flight (TOF) of reflected light may be different. The TOF of the reflected light may be measured to obtain independent distance information for each pixel, and a detection range may reach more than a hundred meters. In addition, the information acquisition module of the area array laser sensor may further acquire the environmental image to implement fast 3D imaging with a resolution of a megapixel level, with an imaging frequency of more than 30 frames per second.

The environmental information acquired by the area array laser sensor may include direction and distance information as well as reflectivity information of the surface of the object to achieve the cognition capability for an environmental factor under the assistance of a deep learning technology in a 3D scenario. In the case of more and denser laser rays, data formed by the reflectivity information may be considered as texture information, and an environmental feature with a matching recognition value may be acquired therein, so that a relatively high environment identification capability is achieved, and advantages of a vision algorithm and the texture information may be enjoyed to a greater extent. Thus it can be seen that the area array laser sensor combines advantages of a line laser sensor and a vision sensor well, which is not only favorable for improving the space perception of the autonomous mobile device for the environment but also favorable for qualitatively improving the obstacle recognition performance of the autonomous mobile device and even makes the spatial perception for the environment reach a level of a human eye. In addition, compared with an image-sensor-based perception solution, the area array laser sensor may provide more accurate distance and direction information and may reduce complexity in perceptual computing and improve the real-time performance.

In addition to the abovementioned advantages, the area array laser sensor may have further advantages in the following aspects. 1) The area array laser sensor has the advantages of solid state, low cost and miniaturization. 2) When the area array layer sensor is mounted and used, no rotating part may be required, so that the structure and size of the sensor may be greatly compressed, the service life may be prolonged, and the cost may be reduced. 3) A field angle of the area array laser sensor may be regulated to be adapted to different autonomous mobile devices, which is favorable for improving the scanning speed and accuracy. 4) The area array laser sensor may simultaneously acquire environmental information in horizontal and vertical directions and may build a 3D map, which is favorable for improving the accuracy of functions of map-based positioning, navigation planning and the like.

In some embodiments, the autonomous mobile device may be controlled to realize various environment-perception-based functions based on the environmental information, acquired by the area array laser sensor, in three dimensions of direction, distance and reflectivity. For example, functions of object recognition, tracking and classification, etc. of the vision algorithm may be realized. In addition, based on high laser ranging accuracy, functions of highly real-time, high-robustness and high-accuracy positioning and map building, etc. may also be realized, and omni-directional supports may further be provided for motion planning, path navigation, positioning, etc. based on the built high-accuracy environmental map. The area array laser sensor may have certain field angles in both the horizontal direction and the vertical direction, called a horizontal field angle and a vertical field angle for short. The horizontal field angle refers to an effective range where the area array laser sensor may acquire information in the horizontal direction, and the vertical field angle refers to an effective range where the area array laser sensor may acquire information in the vertical direction. For an area array laser sensor, a horizontal field angle thereof determines an information acquisition range of the area array laser sensor in the horizontal direction; correspondingly, a vertical field angle determines an information acquisition range of the area array laser sensor in the vertical direction; and the horizontal field angle and the vertical field angle are combined to form an effective spatial range where the area array laser sensor may acquire information. Ranges of horizontal field angles and vertical field angles of different area array laser sensors are different. For example, some area array laser sensors have horizontal field angles of 120 degrees and vertical field angles of 10 degrees, and some other area array laser sensors have horizontal field angles of 90 degrees and vertical field angles of 9 degrees. As another example, some area array laser sensors have horizontal field angles of 90 degrees and vertical field angles of 10 degrees, some area array laser sensors have horizontal field angles of 85 degrees and vertical field angles of 65 degrees, and some area array laser sensors have horizontal field angles of 80 degrees and vertical field angles of 70 degrees, etc. In some embodiments, the magnitudes of the horizontal field angle and vertical field angle of the area array laser sensor may be specially customized according to an application requirement. The circumstance in which the magnitudes of the horizontal field angle and vertical field angle of the area array laser sensor may be customized are discussed with reference to various embodiments of the present disclosure.

In some embodiments, to meet an environmental perception requirement of the autonomous mobile device 100, a horizontal field angle of the first area array laser sensor 106 may be required to meet a field angle requirement of the autonomous mobile device 100 for normal operation in the horizontal direction. In these and other embodiments, a vertical field angle of the first area array laser sensor 106 may also be required to meet a field angle requirement of the autonomous mobile device 100 for normal operation in the vertical direction. If there is one first area array laser sensor 106, the horizontal field angle thereof should be more than or equal to a minimum field angle required by normal operation of the autonomous mobile device 100 in the horizontal direction, and the vertical field angle thereof should be more than or equal to a minimum field angle required by normal operation of the autonomous mobile device 100 in the vertical direction. If there are multiple first area array laser sensors 106, horizontal field angles of the multiple first area array laser sensors 106 may be combined to cover field angles required by normal operation of the autonomous mobile device 100 in the horizontal direction, and vertical field angles of the multiple first area array laser sensors 106 may be combined to cover field angles required by normal operation of the autonomous mobile device 100 in the vertical direction. Under the circumstance that the horizontal field angle and vertical field angle of the first area array laser sensor 106 meet the corresponding field angle requirements, a mounting manner for the first area array laser sensor 106 on the device body 101 may affect the quality of the acquired external environmental information.

In some embodiments, to improve the quality of the external environmental information acquired by the first area array laser sensor 106, an oblique mounting manner for the area array laser sensor is proposed. The oblique mounting manner may also be called a pitching mounting manner or a non-horizontal mounting manner, and is a mounting manner in which the area array laser sensor is obliquely mounted on the device body of the autonomous mobile device in a direction of the vertical field angle. A horizontal mounting manner corresponding to the oblique mounting manner refers to a mounting manner in which the area array laser sensor is horizontally mounted on the device body of the autonomous mobile device in the direction of the vertical field angle. For the horizontal mounting manner, an included angle between an angular bisector of the vertical field angle of the area array laser sensor and a horizontal line is 0, that is, a mounting pitching angle of the area array laser sensor in the vertical direction is 0. For the oblique mounting manner, the included angle between the angular bisector of the vertical field angle of the area array laser sensor and the horizontal line is not 0, that is, the mounting pitching angle of the area array laser sensor in the vertical direction is not 0 such that the area array laser sensor is pitching-up or pitching-down.

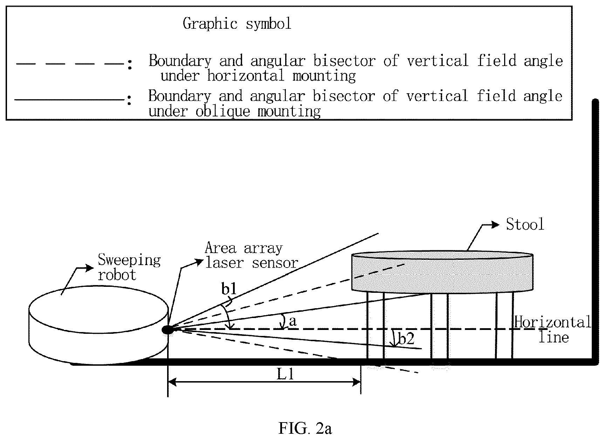

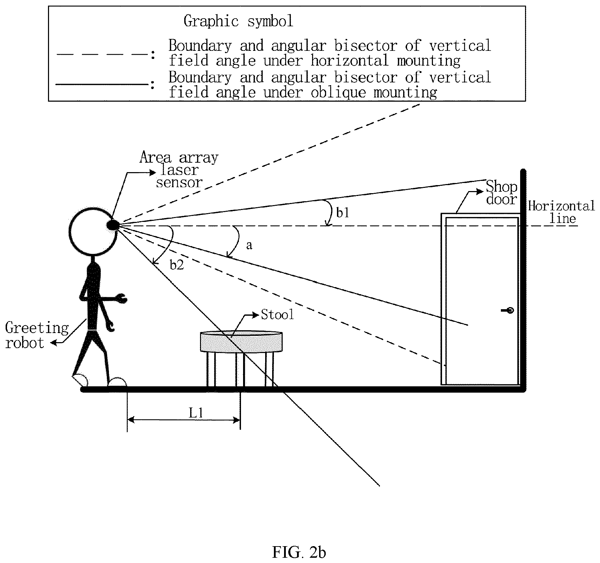

For increased understanding of the oblique mounting manner proposed in some embodiments of the present disclosure, the oblique mounting manner and the horizontal mounting manner are comparatively described in combination with FIG. 2a and FIG. 2b. For a sweeping robot, FIG. 2a is a schematic diagram of a relationship between an angular bisector of a vertical field angle of an area array laser sensor and a horizontal line under an oblique mounting manner and a horizontal mounting manner according to an exemplary embodiment of the present disclosure. For a greeting robot, FIG. 2b is a schematic diagram of a relationship between an angular bisector of a vertical field angle of an area array laser sensor and a horizontal line under an oblique mounting manner and a horizontal mounting manner according to an exemplary embodiment of the present disclosure. In FIG. 2a, the three dashed lines represent two boundaries and an angular bisector of the vertical field angle of the area array laser sensor under the horizontal mounting manner respectively, and the middle dashed line represents the angular bisector of the vertical field angle of the area array laser sensor under the horizontal mounting manner and also represents the horizontal line; and the three solid lines without arrow heads represent two boundaries and an angular bisector of the vertical field angle of the area array laser sensor under the oblique mounting manner, and the middle solid line without arrow heads represents the angular bisector of the vertical field angle of the area array laser sensor under the oblique mounting manner. As shown in FIG. 2a, the included angle between the angular bisector (the middle dashed line in FIG. 2a) of the vertical field angle of the area array laser sensor and the horizontal line (the middle dashed line in FIG. 2a) under the horizontal mounting manner is 0, or in other words, the angular bisector of the vertical field angle of the area array laser sensor is parallel to the horizontal line. It is illustrated in FIG. 2a, for example, that the angular bisector of the vertical field angle of the area array laser sensor overlaps the horizontal line. As shown in FIG. 2a, the included angle a between the angular bisector (the middle solid line without arrow heads in FIG. 2a) of the vertical field angle of the area array laser sensor and the horizontal line (the middle dashed line in FIG. 2a) under the oblique mounting manner is not 0, or in other words, the angular bisector of the vertical field angle of the area array laser sensor is not parallel to the horizontal line.

Further, in FIG. 2a, under the horizontal mounting manner, an information acquisition range of the area array laser sensor above the horizontal direction is the same as an information acquisition range of the area array laser sensor below the horizontal line. In FIG. 2a, under the oblique mounting manner, the information acquisition range of the area array laser sensor above the horizontal line is different from the information acquisition range of the area array laser sensor below the horizontal line. In some embodiments, as illustrated in FIG. 2a, for example, under the oblique mounting manner, the vertical field angle of the area array laser sensor may be pitching-up such that the information acquisition range of the area array laser sensor above the horizontal line may be larger than the information acquisition range of the area array laser sensor below the horizontal line. Alternatively, as illustrated in FIG. 2b, under the oblique mounting manner, the vertical field angle of the area array laser sensor may be pitching-down such that the information acquisition information of the area array laser sensor above the horizontal line may be smaller than the information acquisition range of the area array laser sensor below the horizontal line. In FIG. 2a and FIG. 2b, the information acquisition range of the area array laser sensor above the horizontal direction under the oblique mounting manner is represented with an angle b1, and the information acquisition range of the area array laser sensor below the horizontal line under the oblique mounting manner is represented with an angle b2. The angle b1 is an included angle between the upper boundary of the vertical field angle of the area array laser sensor and the horizontal line under the oblique mounting manner, and the angle b2 is an included angle between a lower boundary of the vertical field angle of the area array laser sensor and the horizontal line under the oblique mounting manner.

In combination with FIG. 2a, the external environmental information falling within a range of the vertical field angle of the area array laser sensor under the horizontal mounting manner is compared with external environmental information falling within the range of the vertical field angle of the area array laser sensor under the oblique mounting manner. In some embodiments, relatively less environmental information at a relatively low position may be acquired by the area array laser sensor under the oblique mounting manner when compared with the horizontal mounting manner. For example, there may be no stool leg information of a portion of a stool close to the ground, but there may be relatively more environmental information acquired at a relatively high position such as, for example, seat information of the stool. Compared with the stool leg information of the portion close to the ground, the seat information may be richer and more favorable for perceiving an obstacle in the external environment by the autonomous mobile device 100. Similarly, in FIG. 2b, more information on a travel path of the autonomous mobile device may be acquired by the area array laser sensor under the oblique mounting manner when compared with that under the horizontal mounting manner. In some embodiments, this information may be more valuable than high-altitude information higher than the autonomous mobile device. Thus in some embodiments, based on the oblique mounting manner, the vertical field angle of the area array laser sensor may cover a more reasonable observation range, which is favorable for acquiring richer external environmental information within the vertical field angle.

In some embodiments, the first area array laser sensor 106 may be obliquely mounted on the device body 101 of the autonomous mobile device 100 in the direction of the vertical field angle, and the included angle between the angular bisector of the vertical field angle and the horizontal line may not be 0 (that is they are not parallel). In such a manner, an observation range of the first area array laser sensor 106 for an information-poor region may be reduced, and an observation range for an information-rich region may be enlarged, so that acquisition of richer external environmental information in the direction of the vertical field angle is facilitated, the quality of the acquired external environmental information is improved, the perception of the autonomous mobile device 100 for an external environment is further improved, and the perception accuracy of the autonomous mobile device 100 for the external environment is improved.

In some embodiments of the present disclosure, an oblique mounting direction and oblique mounting angle of the first area array laser sensor 106 are not limited and may be flexibly set according to factors such as an application scenario and the implementation form of the autonomous mobile device 100. Exemplary descriptions will be made below in combination with scenario-based embodiments.

### Scenario-based embodiment 1

In scenario-based embodiment 1, the autonomous mobile device is a sweeping robot, an area array laser sensor is mounted on the sweeping robot, and the area array laser sensor may acquire environmental information within a horizontal field angle and vertical field angle thereof. The sweeping robot may recognize a region to be cleaned according to the environmental information acquired by the area array laser sensor in a process of executing a cleaning task, and may optionally further plan a path according to the environmental information acquired by the area array laser sensor, move to the region to be cleaned along the planned path and recognize and avoid an obstacle according to the environmental information acquired by the area array laser sensor in a process of moving to the region to be cleaned. Or, the sweeping robot may build an environmental map according to the environmental information acquired by the area array laser sensor. Or, the sweeping robot may be repositioned according to the environmental information acquired by the area array laser sensor.

If the area array laser sensor is horizontally mounted on the sweeping robot in a direction of the vertical field angle, since the sweeping robot is relatively low, most of the vertical field angle of the area array laser sensor falls on the ground. An observation range of the vertical field angle of the area array laser sensor under the horizontal mounting manner is shown by the upper and lower dashed lines in FIG. 2a. This mounting manner may have at least two problems: firstly, ground information may be relatively undiversified and valid environmental information may be relatively less, so that the observation range is wasted to a certain extent; and secondly, an incidence angle for the ground may be relatively large, and the information from the ground may be relatively poor in accuracy and affected more by ground reflection or obstacles on the ground.

To help solve these problems, in scenario-based embodiment 1, the area array laser sensor may be obliquely mounted on the sweeping robot in the direction of the vertical field angle. Specifically, the area array laser sensor may be obliquely upwards mounted on the sweeping robot in the direction of the vertical field angle. In such a manner, the observation range of the area array laser sensor within the vertical field angle may be shown by the three solid lines without arrow heads in FIG. 2a, an observation range for an information-poor region (the ground) may be reduced, and an observation range for an information-rich region (furniture or obstacle on the ground) may be enlarged, so that acquisition of richer external environmental information within the vertical field angle is facilitated, a proportion of large-incidence-angle data in the environmental information may also be reduced, the quality of the acquired external environmental information may be improved, the perception of the sweeping robot for the external environment may be further improved, and the perception accuracy of the sweeping robot for the external environment may be improved.

Further, the sweeping robot may accurately and quickly move to the region to be cleaned based on accurate perception over the external environment in the process of executing the cleaning task, which is favorable for improving the cleaning efficiency. In a process of building the environmental map, the sweeping robot may recognize the obstacle, furniture and the like in the environment based on accurate perception over the external environment to further build a high-accuracy 3D environmental map. Further, considering that not all the information on the ground is invalid, some of the information may be useful for perception of the sweeping robot over the external environment and this information may assist the sweeping robot in navigation, path planning and the like better. In these and other embodiments, it may be beneficial to acquire environmental information in horizontal front and horizontal lower directions. For acquiring the environmental information in the front horizontal and horizontal lower directions, it may be beneficial to ensure that the horizontal front and horizontal lower directions of the sweeping robot fall within a range of the vertical field angle of the area array laser sensor. Based on this, it may be beneficial for an included angle between an angular bisector of the vertical field angle of the area array laser sensor and the horizontal line to not only be larger than 0 but also be smaller than 1/2 of the vertical field angle. In this manner, a lower boundary of the vertical field angle is not higher than the horizontal line.

Further, in some embodiments, the included angle between the angular bisector of the vertical field angle of the area array laser sensor and the horizontal line may be more than or equal to 1/5 of the vertical field angle and less than or equal to 1/3 of the vertical field angle, so that environmental information useful for perception of the sweeping robot over the external environment on the ground may be acquired more accurately, acquisition of a large amount of large-incidence-angle data may also be avoided to a great extent, the proportion of the large-incidence-angle data may be reduced, and the quality of the acquired external environmental information may be improved.

Furthermore, in some embodiments, the included angle between the angular bisector of the vertical field angle of the area array laser sensor and the horizontal line may be, but is not limited to, 4/15 of the vertical field angle.

It is to be noted that the sweeping robot in scenario-based embodiment 1 represents a type of relatively low autonomous mobile devices. Besides the sweeping robot, the relatively low autonomous mobile devices may further include a window cleaning robot and the like. A first area array laser sensor may be mounted on a device body of the autonomous mobile device of this type, and the first area array laser sensor may be obliquely upwards mounted on the device body in a direction of a vertical field angle. Further, an included angle between an angular bisector of a vertical field angle of the first area array laser sensor and the horizontal line may be optionally larger than 0 and smaller than 1/2 of the vertical field angle. Furthermore, the included angle between the angular bisector of the vertical field angle of the first area array laser sensor and the horizontal line may be more than or equal to 1/5 of the vertical field angle and less than or equal to 1/3 of the vertical field angle. For example, the included angle between the angular bisector of the vertical field angle of the first area array laser sensor and the horizontal line may be 4/15 of the vertical field angle.

### Scenario-based embodiment 2

In scenario-based embodiment 2, the autonomous mobile device is a greeting robot, an area array laser sensor is mounted on the greeting robot, and the area array laser sensor may acquire environmental information within a horizontal field angle and vertical field angle thereof. The greeting robot may recognize a user or customer to be received according to the environmental information acquired by the area array laser sensor in a greeting process, optionally further plan a path according to the environmental information acquired by the area array laser sensor and guide the user or the customer to a corresponding region or position along the planned path, and may further recognize and avoid an obstacle according to the environmental information acquired by the area array laser sensor in a process of guiding the user or the customer to the corresponding region.

If the area array laser sensor is horizontally mounted at a chest position of the greeting robot in a direction of the vertical field angle, since the greeting robot is relatively high, most of the vertical field angle of the area array laser sensor may fall to a high-altitude position higher than the head of the greeting robot. In these and other embodiments, an observation range of the vertical field angle of the area array laser sensor under the horizontal mounting manner is shown by the upper and lower dashed lines in FIG. 2b. This may be associated with at least two problems: firstly, high-altitude information may be relatively undiversified, and valid environmental information may be relatively less, so that the observation range is wasted to a certain extent; and secondly, valid environmental information (for example, the stool on the travel path of the greeting robot in FIG. 2b) in an oblique lower region of the greeting robot may be missed which may cause information loss because it is outside the range of the vertical field angle.

To help solve these problems, in scenario-based embodiment 2, the area array laser sensor may be obliquely mounted on the greeting robot in the direction of the vertical field angle. Specifically, the area array laser sensor may be obliquely downwards mounted on the greeting robot in the direction of the vertical field angle. In such a manner, the observation range of the area array laser sensor within the vertical field angle under the oblique mounting manner may be shown by the three solid lines without arrow heads in FIG. 2b, an observation range for an information-poor region (a high-altitude region) may be reduced, an observation range for an information-rich region (the oblique lower region of the greeting robot) may be enlarged and an obstacle (for example, the stool in FIG. 2b) in the oblique lower region of the greeting robot may be observed, so that acquisition of richer external environmental information within the vertical field angle is facilitated, the quality of the acquired external environmental information is improved, the perception of the greeting robot for the external environment is further improved, and the perception accuracy of the greeting robot for the external environment is improved.

Further, with regard to the situation that some environmental information (for example, a ceiling lamp and an upper door edge) of the high-altitude region not higher than the greeting robot is useful for perception of the greeting robot over the external environment such as, for example, when the high-altitude information may assist the greeting robot in navigation, obstacle avoidance and the like better, observation data of the greeting robot in a horizontal upper direction may be beneficial. To ensure the existence of the observation data of the greeting robot in the horizontal upper direction, it may be beneficial for the horizontal upper direction to appear within the range of the vertical field angle of the area array laser sensor. Based on this, it may be beneficial for an included angle between an angular bisector of the vertical field angle of the area array laser sensor and the horizontal line to be larger than 0 and also to be smaller than 1/2 of the vertical field angle. In this manner, an upper boundary of the vertical field angle may not be lower than the horizontal line.

In some embodiments, the greeting robot in scenario-based embodiment 2 may represent a type of autonomous mobile devices with certain heights (for example, relatively great heights). Besides the greeting robot, the relatively high autonomous mobile devices may further include, for example, an air purifier, a warehouse carrying robot or a family caregiver robot, etc. A first area array laser sensor may be mounted on a device body of the autonomous mobile device of this type, and the first area array laser sensor may be obliquely downwards mounted on the device body in a direction of a vertical field angle. Further, an included angle a between an angular bisector of a vertical field angle of the first area array laser sensor and the horizontal line may be optionally larger than 0 and smaller than 1/2 of the vertical field angle. Furthermore, in some embodiments, the included angle a between the angular bisector of the vertical field angle of the first area array laser sensor and the horizontal line may be more than or equal to 1/5 of the vertical field angle and less than or equal to 1/3 of the vertical field angle. For example, the included angle a between the angular bisector of the vertical field angle of the first area array laser sensor and the horizontal line may be 4/15 of the vertical field angle. In the various embodiments of the present disclosure, the angles a, bland b2 represent magnitudes and may not be directional. In some embodiments of the present disclosure, there may be any number of first area array laser sensors 106. For example, in some embodiments, there may be a single first area array laser sensor 106. Alternatively, in some embodiments, there may be multiple first area array laser sensors 106. In these and other embodiments, multiple may refer to two or to more than two. During practical application, some simple application requirements may exist, and only one area array laser sensor may be required to solve problems about environmental perception, so that the autonomous mobile device 100 working in these environments may be provided with only one first area array laser sensor 106. Alternatively, some complex application requirements may also exist, and multiple area array laser sensors may be required to solve the problems about environmental perception, so that the autonomous mobile device 100 working in these environments may be provided with multiple first area array laser sensors 106.

**In embodiments where there is only one first area array laser sensor 106,** the first area array laser sensor 106 may be mounted on a front side of the device body 101, the front side being the side that the device body 101 faces in a forward movement process of the autonomous mobile device 100. In a movement process, the autonomous mobile device 100 may move forwards and may also move backwards. Here, "forward" may be understood as a direction where the autonomous mobile device 100 often or mostly moves in an operating process. The first area array laser sensor 106 is arranged on the front side of the device body 101 of the autonomous mobile device 100 so that environmental information ahead may be acquired more conveniently and accurately in the movement process of the autonomous mobile device 100 and the autonomous mobile device 100 may avoid an obstacle more accurately and move smoothly in the movement process.

Alternatively, in some embodiments the first area array laser sensor 106 may also be mounted on a rear side or lateral surface of the device body 101. In these and other embodiments, the positioning of the first area array laser sensor 106 may be flexibly be set according to an application requirement. The rear side may be a side opposite the front side, and the lateral surface may be a region positioned between the front side and the rear side on the device body 101.

In some embodiments, the autonomous mobile device 100 may usually have a certain height. In these and other embodiments, the first area array laser sensor 106 may be mounted at a specific position (i.e., mounting height) in a height direction of the device body 101. In these and other embodiments, the mounting height of the first area array laser sensor 106 on the device body 101 of the autonomous mobile device 100 is not limited, and the mounting height of the first area array laser sensor 106 on the device body 101 may be flexibly selected according to the application requirement and the height of the autonomous mobile device 100. For example, the first area array laser sensor 106 may be mounted at a top, bottom or middle position of the front side of the device body 101.

**In embodiments where there are multiple first area array laser sensors 106,** the multiple first area array laser sensors 106 may be mounted at different positions on the device body 101. For example, the multiple first area array laser sensors 106 may be mounted around the device body 101. Including multiple first area array laser sensors 106 may be favorable for enlarging the observation range of the autonomous mobile device 100 in the horizontal direction.

In some embodiments, the mounting positions of the multiple first area array laser sensors 106 on the device body 101 may be different and, in addition, the multiple first area array laser sensors 106 may be mounted at various specific positions (i.e., mounting heights) in the height direction of the device body 101. Various different positions are contemplated and there are no limits made relative to the different positions at which the multiple first area array laser sensors 106 may be positioned. The mounting heights of the multiple first area array laser sensors 106 on the device body 101 may be flexibly selected according to the application requirement and the height of the autonomous mobile device 100.

For example, in some embodiments, some of the first area array laser sensors 106 may be at the same mounting height on the device body 101 so that acquisition of richer environmental information at the mounting height may be ensured.

As another example, in some embodiments, the mounting heights of each first area array laser sensor 106 on the device body 101 may be different so that acquisition of environmental information at different height positions may be ensured and the richness of the environmental information may be improved.

As another example, each first area array laser sensor 106 may be at the same mounting height on the device body 101 so that acquisition of richer environmental information at the mounting height may be ensured.

In embodiments where there are multiple first area array laser sensors 106 for improving the richness of the acquired environmental information, the multiple first area array laser sensors 106 may meet have a continuity of horizontal field angles. The continuity of the horizontal field angles may refer to the horizontal field angles of the multiple first area array laser sensors 106 being continuous and substantially continuous or reach set continuity, etc. The definition about the continuity may refer to subsequent embodiments and no more elaborations are made herein. Based on this, the mounting positions of the multiple first area array laser sensors 106 on the device body 101 may have continuity of the horizontal field angles. For example, in some embodiments, a first area array laser sensor 106 may be mounted on the front side of the device body 101, and the other first area array laser sensors 106 may be sequentially mounted at other positions of the device body 101 according to the requirement for continuity of the horizontal field angles.

In some embodiments, to meet the requirement for continuity of the horizontal field angles, the horizontal field angles of two adjacent first area array laser sensors 106 may meet any one of the following exemplary and non-exclusive requirements: maximum viewing distance ends of the horizontal field angles of the two adjacent first area array laser sensors 106 intersect;
boundaries of the horizontal field angles of the two adjacent first area array laser sensors 106 are parallel;
boundaries of the horizontal field angles of the two adjacent first area array laser sensors 106 intersect at a specified position, and the specified position is determined according to a requirement on interference between the horizontal field angles of the two adjacent first area array laser sensors 106.

In each requirement, the environmental information acquired by the two adjacent first area array laser sensors 106 within the respective horizontal field angles do not overlap and interfere with each other; and moreover, the environmental information acquired by the two adjacent first area array laser sensors 106 is continuous, which may have certain advantages in splicing and extraction of environmental features.

In an application scenario, there may be two first area array laser sensors 106, and according to ranges of horizontal field angles of the two first area array laser sensors 106, one sensor may be mounted on the front side of the device body 101 and the other sensor may be mounted on the lateral surface of the device body 101. In such a manner, the horizontal field angles may have continuity and interference between the two sensors may be avoided.

In some embodiments of the present disclosure, the lower boundary of the vertical field angle of the first area array laser sensor 106 may usually be intersected with a bearing surface where the autonomous mobile device 100 is located. For convenient description and distinction, an intersection position of the lower boundary of the vertical field angle of the first area array laser sensor 106 and the bearing surface where the autonomous mobile device 100 is located may be described as a first intersection position. To conveniently acquire richer environmental information, it may be beneficial for a distance between the first intersection position and the autonomous mobile device, for example, a distance L1 shown in FIG. 2a and FIG. 2b, to be greater than a first set distance threshold, which may be preset.

In some embodiments of the present disclosure, the specific value of the first distance threshold is not limited and may be flexibly set according to factors such as the application requirement, the height of the autonomous mobile device and the magnitude of the vertical field angle of the first area array laser sensor. For example, in some embodiments, the first distance threshold may range from 60 to 100cm, and may be, for example, but is not limited to, 60cm, 70cm, 80cm and 90cm.

In some embodiments of the present disclosure, if any two pieces of information in the three pieces of information of an oblique angle of the first area array laser sensor in the direction of the vertical field angle, the mounting height of the first area array laser sensor on the autonomous mobile device and the first distance threshold are determined, the third information may be calculated. For example, the mounting height of the first area array laser sensor on the autonomous mobile device may be calculated according to the oblique angle of the first area array laser sensor in the direction of the vertical field angle and the first distance threshold; and similarly, the oblique angle of the first area array laser sensor in the direction of the vertical field angle may be calculated according to the mounting height of the first area array laser sensor on the autonomous mobile device and the first distance threshold.

In addition, in some embodiments, the bearing surface where the autonomous mobile device is located may be implemented in different manners according to different operating environments of the autonomous mobile device. Specific implementation of the bearing surface is not limited in the embodiments of the present disclosure, and any plane or non-planar surface, etc. capable of bearing the autonomous mobile device may be determined as the bearing surface in the embodiments of the present disclosure. For example, for an autonomous mobile device working on the ground, the ground may be a bearing surface where the autonomous mobile device is located. As another example, for an autonomous mobile device working on a tabletop, the tabletop may be a bearing surface where the autonomous mobile device is located. As another example, for an autonomous mobile device working in a carriage, a floor of the carriage may be a bearing surface where the autonomous mobile device is located. As another example, for an autonomous mobile device working on a roof, the roof may be a bearing surface where the autonomous mobile device is located. Here, the descriptions about the bearing surface are also applied to other embodiments of the present disclosure.

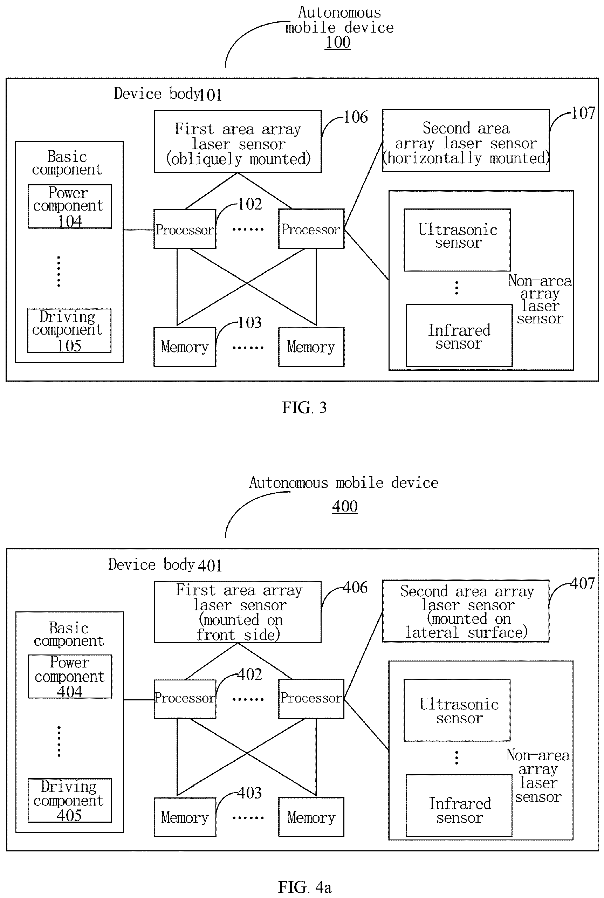

As shown in FIG. 3, in another exemplary embodiment of the present disclosure, the autonomous mobile device 100 may further include a second area array laser sensor 107 mounted on the device body 101. The first area array laser sensor 106 and the second area array laser sensor 107 may be area array laser sensors similar to the first area array laser sensor 106 described above relative to FIG. 1. The structure, working principle, advantages and the like of the first area array laser sensor 106 and the second area array laser sensor 107 may be similar and/or identical to those described above relative to the first area array laser sensor 106. In the some embodiments, the second area array laser sensor 107 may differ from the first area array laser sensor 106 is that the second area array laser sensor 107 may be horizontally mounted on the device body 101 in a direction of a vertical field angle, that is, an included angle between an angular bisector of the vertical field angle of the second area array laser sensor 107 and the horizontal line may be 0, or in other words, the angular bisector of the vertical field angle of the second area array laser sensor 107 may be parallel to the horizontal line.

In some embodiments, the autonomous mobile device 100 may include any number of second area array laser sensors 107. For example, in some embodiments, the autonomous mobile device 100 may include a single second area array laser sensor 107. Alternatively, the autonomous mobile device 100 may include multiple second area array laser sensors 107.

In embodiments of the present disclosure, the mounting positions and mounting heights of the first area array laser sensor 106 and the second area array laser sensor 107 on the device body 101 are not limited. For example, in some embodiments, the first area array laser sensor 106 and the second area array laser sensor 107 may be at the same mounting height on the device body 101. Alternatively, in some embodiments, all the first area array laser sensors 106 may be at the same mounting height on the device body 101, all the second area array laser sensors 107 may be at the same mounting height on the device body 101, but the mounting heights of the first area array laser sensors 106 on the device body 101 may be different from the mounting heights of the second area array laser sensors 107 on the device body 101. In some embodiments, the first area array laser sensor 106 and the second area array laser sensor 107 may be uniformly distributed on the device body 101. Alternatively, in some embodiments, the first area array laser sensor 106 and the second area array laser sensor 107 may be mounted at an interval on the device body 101. Alternatively, in some embodiments, the first area array laser sensor 106 may be mounted on the front side of the device body 101, and the second area array laser sensor 107 may be mounted on the rear side of the device body 101. Alternatively, in some embodiments, the first area array laser sensor 106 may be mounted on the front side of the device body 101, and the second area array laser sensor 107 may be mounted on the lateral surface of the device body 101. Alternatively, in some embodiments, the second area array laser sensor 107 may be mounted on the front side of the device body 101, and the first area array laser sensor 106 may be mounted on the lateral surface of the device body 101.

In the embodiment shown in FIG. 3, the autonomous mobile device 101 includes multiple area array laser sensors, part of the area array laser sensors are mounted on the device body 101 in the oblique mounting manner and part of the area array laser sensors are mounted on the device body 101 in the horizontal mounting manner. For convenient distinction and description, the area array laser sensors mounted on the device body 101 in the oblique mounting manner are called the first area array laser sensors and the area array laser sensors mounted on the device body 101 in the horizontal mounting manner are called the second area array laser sensors. In the embodiment shown in FIG. 3, the horizontal mounting manner is combined with the oblique mounting manner so that the environmental information in the vertical direction may be acquired more comprehensively and the environmental perception of the autonomous mobile device 101 may further be improved.

In some embodiments, a lower boundary of the vertical field angle of the second area array laser sensor 107 may usually be intersected with the bearing surface where the autonomous mobile device is located. For convenient description and distinction, an intersection position of the lower boundary of the vertical field angle of the second area array laser sensor 107 and the bearing surface where the autonomous mobile device is located may be described as a second intersection position. To conveniently acquire richer environmental information, it may be beneficial for a distance between the second intersection position and the autonomous mobile device to be greater than the second set distance threshold, which may be preset.

In some embodiments of the present disclosure, a specific value of the second distance threshold is not limited and may be flexibly set according to factors such as the application requirement, the height of the autonomous mobile device and a magnitude of the vertical field angle of the second area array laser sensor. For example, in some embodiments, the second distance threshold may range from 50 to 90cm, and may be, for example, but is not limited to, 50cm, 60cm, 70cm and 80cm. In some embodiments, the values of the second distance threshold and the first distance threshold may be the same. Alternatively, in some embodiments, and the values of the first distance threshold and the second distance threshold may be different. For a particular type of area array laser sensors, if the first area array laser sensor is obliquely upwards mounted on the device body in the direction of the vertical field angle, the first distance threshold may be greater than the second distance threshold; alternatively, if the first area array laser sensor is obliquely downwards mounted on the device body in the direction of the vertical field angle, the first distance threshold may be less than the second distance threshold.

In some embodiments, when the second distance threshold is determined, a range for the mounting height of the second area array laser sensor on the device body may be determined to a certain extent according to the requirement that the distance between the second intersection position and the autonomous mobile device be greater than the second distance threshold.

FIG. 4a is a schematic diagram of a hardware structure of still another autonomous mobile device according to an exemplary embodiment of the present disclosure. As shown in FIG. 4a, the autonomous mobile device 400 may include a device body 401. One or more processors 402 and one or more memories 403 may be arranged on the device body 401.

The one or more memories 403 may be used to store a computer program, and the computer program may be executed by the one or more processors 402 to enable the one or more processors 402 to control the autonomous mobile device 400 to execute a corresponding task. In addition to storing the computer program, the one or more memories 403 may further be configured to store various other data to support operations on the autonomous mobile device 400. Examples of such data may include instructions for any application programs or methods operated on the device 400, map data of an environment/scenario where the autonomous mobile device 400 is located, a working mode, a working parameter, etc.

The one or more processors 402 may be considered as a control system of the autonomous mobile device 400 and may be used to execute the computer instruction stored in the one or more memories 403 to control the autonomous mobile device 400 to execute the corresponding task.

Further, besides the one or more processors 402 and the one or more memories 403, in some embodiments, the autonomous mobile device 400 may include other basic components that may be further arranged or mounted on the device body 401 such as, for example, a power component 404 and a driving component 405. In some embodiments, the driving component 405 may optionally include a driving wheel, a driving motor, a universal wheel, etc.

It is to be noted here that basic components of different autonomous mobile devices 400 and compositions of the basic components may be different depending on the particular implementation of a particular autonomous mobile device 400 and only examples are presented in the embodiments of the present disclosure. In addition, the environments where different autonomous mobile devices 400 are located, tasks required to be executed, the functions that may be realized and the like may also be different and are provided as examples.

In some embodiments, the autonomous mobile device 400 is not limited, and the autonomous mobile device 400 may be any mechanical device capable of implementing highly autonomous spatial movement in the environment where it is located, for example, a driverless car, an unmanned aerial vehicle, a robot or an air purifier. The autonomous mobile device 400 may be various types of robots such as a cleaning robot and other service robots. The cleaning robot may refer to a robot capable of autonomously executing a cleaning task in an operating environment thereof and includes a sweeping robot, a window cleaning robot and the like. Other service robots refer to a robot capable of autonomously moving and providing non-cleaning service in an operating environment thereof, and include a family caregiver robot, a greeting robot or a warehouse carrying robot, etc.

In some embodiments, the autonomous mobile device 400 may also be in different shapes associated with different implementation forms of the autonomous mobile device 400. The implementation form of the autonomous mobile device 400 is not limited in the present embodiment. For example, in some embodiments, an outer contour shape of the autonomous mobile device 400 may be an irregular shape and may also be some regular shapes. For example, the outer contour shape of the autonomous mobile device 400 may be a regular shape such as a round, an ellipse, a square, a triangle, a drop shape or a D shape. Any other shape except the regular shape is called an irregular shape. For example, an outer contour of a humanoid robot, an outer contour of a driverless car, an outer contour of an unmanned aerial vehicle and the like are irregular shapes.

The autonomous mobile device 400 in any form may be required to perceive an external environment where it is located to autonomously move in the environment. In the present embodiment, the autonomous mobile device 400 may further include a first area array laser sensor 406 and a second area array laser sensor 407. The first area array laser sensor 406 and the second area array laser sensor 407 may be mounted on the device body 401, and may acquire environmental information in an external environment where the autonomous mobile device 400 is located and may transmit the acquired external environmental information to the one or more processors 402. The one or more processors 402 may perceive the external environment according to the external environmental information acquired by the first area array laser sensor 406 and further control the autonomous mobile device 400 to enable the autonomous mobile device 400 to execute the corresponding task or realize a corresponding function.

Both the first area array laser sensor 406 and the second area array laser sensor 407 are area array laser sensors. "First" in the first area array laser sensor 406 and "second" in the second area array laser sensor 407 are labels to distinguish the area array laser sensors. "First" and "second" do not represent any particular number, sequence, or ordering for the first area array laser sensor 406 or the second area array laser sensor 407. A structure, working principle, advantages and the like of the area array laser sensor have been described above and no further elaborations will be made here.

In some embodiments, two area array laser sensors may be implemented to overcome the shortcoming of relatively undiversified observation data of a single area array laser sensor. In addition, with regard to the fact that horizontal field angles of the first area array laser sensor 406 and the second area array laser sensor 407 have certain ranges, mounting positions of the first area array laser sensor 406 and the second area array laser sensor 407 may be as close as possible in a direction of the horizontal field angles to ensure that the horizontal field angles of the two area array laser sensors have continuity. The continuity of the horizontal field angles may refer to horizontal observation ranges covered by the horizontal field angles of the two area array laser sensors that are continuous or maximally continuous or reach certain continuity. The continuity may be defined as a ratio of an area of an uncovered regional range between the two horizontal observation ranges to an area sum of the two horizontal observation ranges under the circumstance that the horizontal observation ranges covered by the horizontal field angles of the two area array laser sensors are discontinuous. Reaching certain continuity may include the continuity is greater than a set continuity threshold. Other definitions of continuity are also envisioned.

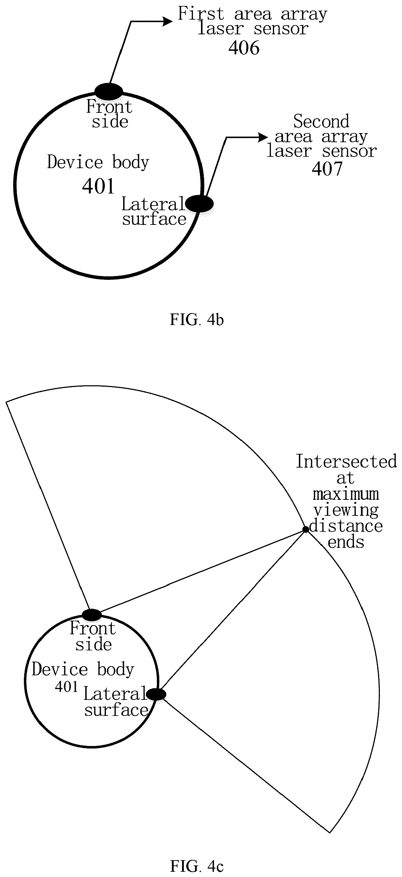

As shown in FIG. 4b, in some embodiments, the first area array laser sensor 406 may be mounted on a front side of the device body 401 and the second area array laser sensor 407 may be mounted on a lateral surface of the device body 401. When compared with alternative autonomous mobile devices 400 in which a first area array laser sensor 406 and a second area array laser sensor 407 are symmetrically mounted on the front and rear sides or left and right sides of the device body 401, the mounting manner depicted in FIG. 4b has at least the advantages that positions of the two area array laser sensors are closer and it may be ensured to a certain extent that the horizontal observation ranges covered by the horizontal field angles of the two area array laser sensors meet the requirement on continuity. The "front side" and the "lateral surface" are defined above with reference to the autonomous mobile device 100 of FIG. 1.

In some embodiments, the lateral surface of the device body 401 may actually be a regional range and may be a regional range between the front side and rear side of the device body 401. In these and other embodiments, the specific position where the second area array laser sensor 407 is mounted in a lateral region is not limited as long as the two horizontal field angles meet the requirement on continuity. In some embodiments, as shown in FIG. 4b, the mounting positions of the first area array laser sensor 406 and the second area array laser sensor 407 may form, but is not limited to, a right-angle relationship.

In such a mounting manner of combining the front side and the lateral surface, environmental information in front of the autonomous mobile device 400 may be acquired to achieve information advantages for environmental perception, path planning, obstacle avoidance and the like of the autonomous mobile device 400, and repetition of the environmental information acquired by the two area array laser sensors may also be reduced to improve the richness of the environmental information and solve the problem of low information richness of a single area array laser sensor. Moreover, the first area array laser sensor 406 mounted on the front side of the device body 401 may also achieve a front buffer action for the autonomous mobile device 400 to reduce dependence on a front buffer device adopting infrared buffering and the like.

If the autonomous mobile device 400 does not support an edgewise mode, the second area array laser sensor 407 may be mounted on a left lateral surface of the device body 401 and may also be mounted on a right lateral surface of the device body 401. If the autonomous mobile device 400 supports the edgewise mode, it may be determined in combination with the edgewise mode supported by the autonomous mobile device 400 that the second area array laser sensor 407 is mounted on the left lateral surface or right lateral surface of the device body 401.

If the autonomous mobile device 400 supports a right edgewise mode, the second area array laser sensor 407 may be arranged on the left lateral surface of the device body 401; and if the autonomous mobile device 400 supports a left edgewise mode, the second area array laser sensor 407 may be arranged on the right lateral surface of the device body 401. In terms of selecting the left and right lateral surfaces for the second area array laser sensor 407, with regard to the edgewise mode of the autonomous mobile device 400, the lateral surface opposite to the edgewise mode supported by the autonomous mobile device 400 may be selected, so that the second area array laser sensor 407 may be blocked at relatively few angles when the autonomous mobile device 400 works in the supported edgewise mode, which may be favorable for providing as much environmental information as possible for the autonomous mobile device 400.

The edgewise mode may refer to a mode that the autonomous mobile device 400, when meeting a fixed object such as a wall, a cupboard and a wardrobe, continues executing the task along an edge of the fixed object. The left edgewise mode may refer to a mode that a left lateral surface of the autonomous mobile device 400 continues executing the task along the edge of the fixed object. The right edgewise mode may refer to a mode that a right lateral surface of the autonomous mobile device 400 continues executing the task along the edge of the fixed object.

In some embodiments of the present disclosure, the mounting positions of the first area array laser sensor 406 and the second area array laser sensor 407 may be as close as possible according to ranges of the horizontal field angles of the first area array laser sensor 406 and the second area array laser sensor 407 such that the horizontal field angles meet the requirement on the continuity.

However, in some embodiments, if the mounting positions of the first area array laser sensor 406 and the second area array laser sensor 407 are too close, the horizontal field angles of the two area array laser sensors may overlap each other, and if an overlapping range of the two horizontal field angles exceeds a certain extent, the two area array laser sensors may interfere with each other. Therefore, when the mounting positions of the first area array laser sensor 406 and the second area array laser sensor 407 are as close as possible, it may be beneficial for the interference between the first area array laser sensor 406 and the second area array laser sensor 407 to be avoided. Based on the above considerations, in a process of mounting the first area array laser sensor 406 and the second area array laser sensor 407, the mounting positions of the first area array laser sensor 406 and the second area array laser sensor 407 on the device body 401 may be determined by any one of the following manners, among other ways. In other words, after the first area array laser sensor 406 and the second area array laser sensor 407 are successfully mounted, the horizontal field angles of the first area array laser sensor 406 and the second area array laser sensor 407 meet a requirement in any one of the following manners, among other manners. In these manners, the horizontal field angles may meet the requirement on the continuity and the problem of interference caused by excessive overlapping between the horizontal field angles between the two area array laser sensors may be solved or reduced.

A first manner: maximum viewing distance ends of the horizontal field angles of the first area array laser sensor 406 and the second area array laser sensor 407 may intersect, as shown in FIG. 4c. Therefore, the environmental information acquired by the first area array laser sensor 406 and the second area array laser sensor 407 within the respective horizontal field angles may not overlap and interfere with each other. Moreover, the maximum viewing distance ends of the horizontal field angles of the two area array laser sensors intersect, so that the environmental information acquired by the two area array laser sensors is continuous, which has certain advantages in splicing and extraction of environmental features.

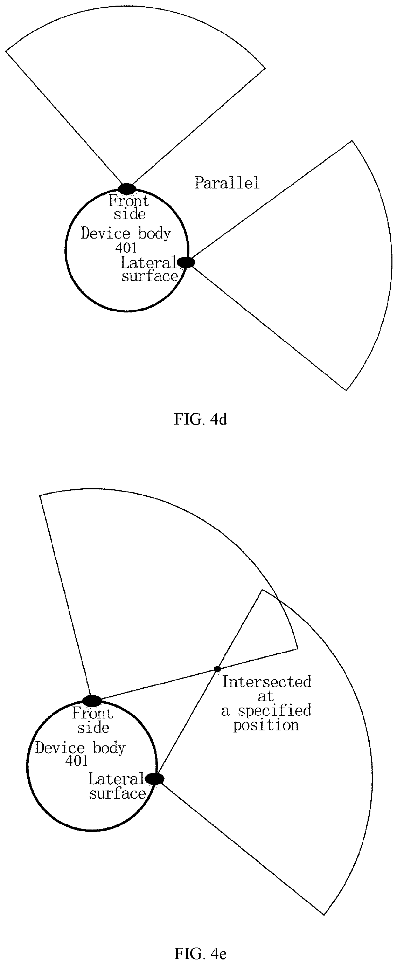

A second manner: boundaries of the horizontal field angles of the first area array laser sensor 406 and the second area array laser sensor 407 may be parallel, as shown in FIG. 4d. Therefore, the environmental information acquired by the first area array laser sensor 406 and the second area array laser sensor 407 within the respective horizontal field angles may not overlap and interfere with each other. Moreover, the horizontal field angles of the two area array laser sensors are parallel, so that the environmental information acquired by the two area array laser sensors is continuous in the horizontal direction, which has certain advantages in splicing and extraction of the environmental features.

A third manner: boundaries of the horizontal field angles of the first area array laser sensor 406 and the second area array laser sensor 407 are intersected at a specified position, as shown in FIG. 4e. The specified position is determined by minimum observation distances required to be met by the first area array laser sensor 406 and the second area array laser sensor 407. For convenient distinction from the maximum viewing distance end in the first manner, the specified position in the third manner may be another position, except a minimum viewing distance end, on a boundary line of the horizontal field angle. That is, if the horizontal field angles of the two area array laser sensors do not overlap each other within the minimum observation distances required to be met by the two area array laser sensors, the requirement that the two area array laser sensors may not interfere with each other may be met; and in addition, the boundaries of the two horizontal field angles may intersect at the specified position, so that the environmental information acquired by the two area array laser sensors are continuous in the horizontal direction, which has certain advantages in splicing and extraction of the environmental features.

In some embodiments of the present disclosure, mounting manners for the first area array laser sensor 406 and the second area array laser sensor 407 in directions of vertical field angles are not limited. In some embodiments, the first area array laser sensor 406 and/or the second area array laser sensor 407 may be obliquely mounted on the device body in the directions of the vertical field angles.

If the first area array laser sensor 406 is obliquely mounted on the device body in the direction of the vertical field angle, the first area array laser sensor 406 may be obliquely upwards mounted on the device body in the direction of the vertical field angle or the first area array laser sensor 406 may be obliquely downwards mounted on the device body in the direction of the vertical field angle. This may depend on a specific application requirement.

If the second area array laser sensor 407 is obliquely mounted on the device body in the direction of the vertical field angle, the second area array laser sensor 407 may be obliquely upwards mounted on the device body in the direction of the vertical field angle or the second area array laser sensor 407 may be obliquely downwards mounted on the device body in the direction of the vertical field angle. This may depend on a specific application requirement.

If both the first area array laser sensor 406 and the second area array laser sensor 407 are obliquely mounted on the device body in the directions of the vertical fields, the two area array laser sensors may be obliquely upwards mounted on the device body in the directions of the vertical field angles, the two area array laser sensors may be obliquely downwards mounted on the device body in the directions of the vertical field angles, or one may be obliquely upwards mounted on the device body in the direction of the vertical field angle and the other may be obliquely downwards mounted on the device body in the direction of the vertical field angle.

As described above, the first area array laser sensor 406 and the second area array laser sensor 407 may be positioned at different mounting heights on the device body and no further elaboration is made herein.

In some embodiments of the present disclosure, lower boundaries of the vertical field angles of the first area array laser sensor 406 and the second area array laser sensor 407 may usually be intersected with a bearing surface where the autonomous mobile device 400 is located. For convenient description and distinction, an intersection position of the lower boundary of the vertical field angle of the first area array laser sensor 406 and the bearing surface where the autonomous mobile device 400 is located may be described as a first intersection position, and an intersection position of the lower boundary of the vertical field angle of the second area array laser sensor 407 and the bearing surface where the autonomous mobile device 400 is located may be described as a second intersection position.

To conveniently acquire richer environmental information, it may be beneficial for a distance between the first intersection position and the autonomous mobile device 400 to be greater than a first distance threshold, which may be preset; and similarly, it may be beneficial for a distance between the second intersection position and the autonomous mobile device 400 to be greater than a second distance threshold, which may be preset, and.

In some embodiments of the present disclosure, the first distance threshold and the second distance threshold may take multiple different values and are not limited. For example, the first distance threshold may be flexibly set according to factors such as the application requirement, a height of the autonomous mobile device 400 and the magnitude of the vertical field angle of the first area array laser sensor 406. Similarly, the second distance threshold may be flexibly set according to factors such as the application requirement, the height of the autonomous mobile device 400 and the magnitude of the vertical field angle of the second area array laser sensor 407.

In some embodiments, the second distance threshold and the first distance threshold may be the same. Alternatively, in some embodiments, the second distance threshold and the first distance threshold may be different. If the first area array laser sensor 406 and the second area array laser sensor 407 are area array laser sensors of the same type and a horizontal mounting manner is used for both the first area array laser sensor 406 and the second area array laser sensor 407 in the directions of the vertical field angles, the values of the first distance threshold and the second distance threshold may be the same. If the first area array laser sensor 406 and the second area array laser sensor 407 are area array laser sensors of different types, different values may be used for the first distance threshold and the second distance threshold. In some embodiments, when the first area array laser sensor 406 and the second area array laser sensor 407 belong to the same type, if different mounting manners are used for the two area array laser sensors in the directions of the vertical angles, different values may also be used for the first distance threshold and the second distance threshold.

For example, when the first area array laser sensor 406 and the second area array laser sensor 407 are area array laser sensors of the same type, if the first area array laser sensor 406 is obliquely upwards mounted on the device body 401 in the direction of the vertical field angle, the first distance threshold may be greater than the second distance threshold. If the first area array laser sensor 406 is obliquely downwards mounted on the device body 401 in the direction of the vertical field angle, the first distance threshold may be less than the second distance threshold.

In the embodiments of the present disclosure, in addition to the area array laser sensor, a non-area array laser sensor may also be arranged or mounted on the device body 101 of the autonomous mobile device 100 or on the device body 401 of the autonomous mobile device 400, and the non-area array laser sensor may assist the area array laser sensor in acquiring richer environmental information. In some embodiments, the non-area array laser sensor may include one or any combination of an ultrasonic sensor, an infrared sensor, a vision sensor, a single-line laser sensor and a multi-line laser sensor. Integrating the environmental information acquired by each sensor may further improve the environmental perception accuracy and precision and facilitate further improvement in the function control accuracy.

Those skilled in the art should know that the embodiments of the present invention may be provided as a method, a system or a computer program product. Therefore, the present invention may adopt a form of a pure hardware embodiment, a pure software embodiment and a combined software and hardware embodiment. Moreover, the present invention may adopt a form of computer program product implemented on one or more computer-available storage media (including, but not limited to, a disk memory, a Compact Disc Read-Only Memory (CD-ROM) and an optical memory) including computer-available program codes.

The present invention is described with reference to flowcharts and/or block diagrams of the method, a device (system) and computer program product according to one or more embodiments of the present invention. It is to be understood that each flow and/or block in the flowcharts and/or the block diagrams and combinations of the flows and/or blocks in the flowcharts and/or the block diagrams may be implemented by computer program instructions. These computer program instructions may be provided for a general computer, a dedicated computer, an embedded processor or a processor of another programmable data processing device to generate a machine, so that an apparatus for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction apparatus may be generated by the instructions stored in the computer-readable memory, the instruction apparatus realizing the function(s) specified in one flow or many flows in the flowcharts and/or one block or many blocks in the block diagrams. These computer program instructions may further be loaded onto the computer or the other programmable data processing device, so that a series of operating steps are executed on the computer or the other programmable data processing device to generate processing implemented by the computer, and steps for realizing the function(s) specified in one flow or many flows in the flowcharts and/or one block or many blocks in the block diagrams are provided by the instructions executed on the computer or the other programmable data processing device.

In a typical configuration, a computing device may include one or more CPUs, an input/output interface, a network interface and a memory.

The memory may include forms of a volatile memory, Random Access Memory (RAM) and/or non-volatile memory, etc. in computer-readable media, for example, a Read-Only Memory (ROM) or a flash RAM. The memory is an example of the computer-readable medium.

The computer-readable medium includes non-volatile, removable and fixed media and may store information by any method or technology. The information may be a computer-readable instruction, a data structure, a program module or other data. Examples of a computer storage medium includes, but are not limited to, a Phase-change RAM (PRAM), a Static RAM (SRAM), a Dynamic RAM (DRAM), a RAM of other types, a ROM, an Electrically Erasable Programmable ROM (EEPROM), a flash memory or other memory technologies, a CD-ROM, a Digital Video Disk (DVD) or other optical memories, a cassette tape, a tape disk memory or other magnetic storage devices or any other non-transmission media, and may be configured to store information accessible for the computing device. It is defined herein that the computer-readable medium does not include transitory media, for example, a modulated data signal and a carrier.

It is also to be noted that terms "include", "contain" or any other variants thereof are intended to include nonexclusive inclusions, thereby ensuring that a process, method, commodity or device including a series of elements not only includes those elements but also includes other elements which are not clearly listed or further includes elements intrinsic to the process, the method, the commodity or the device. Under the circumstance of no more restrictions, an element defined by statement "including a/an" does not exclude existence of another element which is the same in a process, method, commodity or device including the element.

The above is only the embodiment of the present disclosure and not intended to limit the present disclosure. Those skilled in the art may make various modifications and variations to the present disclosure. Any modifications, equivalent replacements, improvements and the like made within the spirit and principle of the present disclosure shall fall within the scope of the claims of the present disclosure.

## Claims

1. An autonomous mobile device, comprising:
a device body; and
a first area array laser sensor mounted on the device body,
wherein the first area array laser sensor is obliquely mounted on the device body in a direction of a vertical field angle.

2. The device according to claim 1, wherein an included angle between an angular bisector of the vertical field angle of the first area array laser sensor and a horizontal line is not 0.

3. The device according to claim 2, wherein the first area array laser sensor is obliquely upwards mounted on the device body in the direction of the vertical field angle.

4. The device according to claim 3, wherein the included angle between the angular bisector of the vertical field angle of the first area array laser sensor and the horizontal line is larger than 0 and smaller than 1/2 of the vertical field angle.

5. The device according to claim 4, wherein the included angle between the angular bisector of the vertical field angle of the first area array laser sensor and the horizontal line is larger than or equal to 1/5 and smaller than 1/3 of the vertical field angle.

6. The device according to claim 5, wherein the included angle between the angular bisector of the vertical field angle of the first area array laser sensor and the horizontal line is 4/15 of the vertical field angle.

7. The device according to claim 2, wherein the first area array laser sensor is obliquely downwards mounted on the device body in the direction of the vertical field angle.

8. The device according to claim 7, wherein the included angle between the angular bisector of the vertical field angle of the first area array laser sensor and the horizontal line is larger than 0 and smaller than 1/2 of the vertical field angle.

9. The device according to claim 1, wherein the first area array laser sensor is a plurality of first area array laser sensors.

10. The device according to claim 9, wherein one first area array laser sensor of the plurality of first area array laser sensors is mounted on a front side of the device body, the front side being a side that the device body faces in a forward movement process of the autonomous mobile device, and
wherein each other first area array laser sensor of the plurality of first area array laser sensors is sequentially mounted at other positions of the device body according to a requirement on continuity of horizontal field angles.

11. The device according to claim 10, wherein:
maximum viewing distance ends of the horizontal field angles of two adjacent first area array laser sensors of the plurality of first area array laser sensors intersect; or
boundaries of the horizontal field angles of the two adjacent first area array laser sensors are parallel; or
boundaries of the horizontal field angles of the two adjacent first area array laser sensors intersect at a specified position,
wherein the specified position is determined by minimum observation distances required to be met by the two adjacent area array laser sensors.

12. The device according to any one of claim 1 to 11, wherein a distance between a first intersection position and the autonomous mobile device is greater than a first set distance threshold, and the first intersection position is a position where a lower boundary of the vertical field angle of the first area array laser sensor is intersected with a bearing surface where the autonomous mobile device is located.

13. The device according to claim any one of 1 to 11, further comprising a second area array laser sensor mounted on the device body, wherein the second area array laser sensor is horizontally mounted on the device body in the direction of the vertical field angle.

14. The device according to claim 13, wherein an angular bisector of the vertical field angle of the second area array laser sensor is parallel to a horizontal line.

15. The device according to claim 14, wherein the second area array laser sensor is a plurality of second area array laser sensors.

16. The device according to claim 13, wherein the first area array laser sensor and the second area array laser sensor are at a same mounting height on the device body.

17. The device according to claim 13, wherein the autonomous mobile device is a robot, an air purifier, a driverless car or an unmanned aerial vehicle.

18. The device according to claim 17, wherein the robot is a sweeping robot, a window cleaning robot, a greeting robot, a family caregiver robot or a warehouse carrying robot.

19. The device according to claim 12, wherein a distance between a second intersection position and the autonomous mobile device is greater than a second set distance threshold, and the second intersection position is a position where a lower boundary of the vertical field angle of the second area array laser sensor is intersected with a bearing surface where the autonomous mobile device is located.

20. An autonomous mobile device, comprising:
a device body;
a first area array laser sensor mounted on a front side of the device body; and
a second area array laser sensor mounted on a lateral surface of the device body.

21. The device according to claim 20, wherein if the autonomous mobile device supports a right edgewise mode, the second area array laser sensor is arranged on a left lateral surface of the device body; and, if the autonomous mobile device supports a left edgewise mode, the second area array laser sensor is arranged on a right lateral surface of the device body.

22. The device according to claim 20 or 21, wherein:
maximum viewing distance ends of horizontal field angles of the first area array laser sensor and the second area array laser sensor intersect; or
boundaries of the horizontal field angles of the first area array laser sensor and the second area array laser sensor are parallel; or
boundaries of the horizontal field angles of the first area array laser sensor and the second area array laser sensor intersect at a specified position, the specified position being determined by minimum observation distances required to be met by the first area array laser sensor and the second area array laser sensor.

23. The device according to claim 20 or 21, wherein at least one of the first area array laser sensor and the second area array laser sensor is obliquely mounted on the device body in a direction of a vertical field angle.

24. The device according to claim 20 or 21, wherein a distance between a first intersection position and the autonomous mobile device is greater than a first set distance threshold, and the first intersection position is a position where a lower boundary of the vertical field angle of the first area array laser sensor intersects with a bearing surface where the autonomous mobile device is located.

25. The device according to claim 20 or 21, wherein a distance between a second intersection position and the autonomous mobile device is greater than a second set distance threshold, and the second intersection position is a position where a lower boundary of the vertical field angle of the second area array laser sensor intersects with a bearing surface where the autonomous mobile device is located.
